# EUROPEAN PATENT APPLICATION

(11) **EP 0 644 361 A1**
(43) Date of publication of application: **22.03.1995**
(21) Application number: 94114590.6
(22) Date of filing: 16.09.1994
(51) Int. Cl.: F16H 61/06, F16H 61/02

(54) **Controller of automatic transmission**

(30) Priority: 17.09.1993 JP 232041/93
(71) Applicant: AISIN AW CO., LTD., Anjo-shi Aichi-ken 444-11 (JP)
(72) Inventor: Kazumasa, Tsukamoto, Anjo-Shi, Aichi-ken (JP); Masahiko, Ando, Anjo-Shi, Aichi-ken (JP); Masahiro, Hayabuchi, Anjo-Shi, Aichi-ken (JP); Toshihiro, Kano, Anjo-Shi, Aichi-ken (JP)
(74) Representative: VOSSIUS & PARTNER

(57) **Abstract**

A controller of an automatic transmission which allows to make a gear change favorably in any traveling condition and to always obtain the best gear change characteristics is provided. The controller of the automatic transmission of the present invention comprises input torque determining means 41 for determining an input torque input to the transmission, inertia torque estimating means 42 for estimating an inertia torque corresponding to a varying speed of number of revolutions of a rotary member during gear change, input torque correcting means 43 for calculating a required operating torque by adding the input torque with the inertia torque and operating pressure control means 44 for controlling an operating pressure by corresponding to the required operating torque. Because the operating pressure corresponding to the necessary engagement torque is generated in the hydraulic servo 51, the operating pressure necessary for gear change can be generated in the hydraulic servo 51 no matter how a throttle opening and driving speed may be or the gear change is made step by step or jumped gear change is made, thus allowing to make a gear change favorably in any traveling condition and to always obtain the best gear change characteristics.

## Description

The present invention relates to a controller of an automatic transmission.

Conventionally, an automatic transmission has a gear box comprising a gear train and is constructed so as to transmit revolutions to a certain gear element in the gear train and to take out the revolutions from another gear element. To that end, a plurality of frictional engage elements such as a clutch and brake are provided to selectively transmit the revolutions among each of the gear elements by engaging and disengaging the frictional engage elements to provide gear change steps corresponding to combinations of the gear elements.

In a case of a hydraulic control automatic transmission, each of the frictional engage elements has a corresponding hydraulic servo. For example, the gear change can be made to a certain gear change step by newly supplying oil to a hydraulic servo to which no oil has been supplied to engage its frictional engage element and by discharging oil from a hydraulic servo to which oil has been supplied to release its frictional engage element.

By the way, if oil is abruptly supplied to the hydraulic servo, the frictional engage element is also abruptly engaged along that, thereby causing a gear change shock. Then the gear change shock is reduced by supplying oil to the hydraulic servo by giving an appropriate transient characteristic to it.

A gear change shock caused by an excessive or deficient operating pressure may be also reduced and a life of the frictional engage elements be prolonged by governing a line pressure corresponding to an input torque input to the transmission. Then there has been provided a prior art automatic transmission which estimates an input torque corresponding to a fuel injection pulse for controlling an engine and to an engine speed and governs a line pressure corresponding to the input torque to adjust an operating pressure of a hydraulic servo to an adequate value (hereinafter referred to as "the first prior art automatic transmission". See Japanese Patent Laid-Open No. Hei 1-116363.)
Also another prior art automatic transmission has been provided which governs a line pressure so that a gear change time agrees with its targeted value, corresponding to frictional engage elements, an elapsed deterioration of oil and others and fluctuations in production (hereinafter referred to as "the second prior art automatic transmission". See Japanese Patent Laid-Open No. Hei 2-31069.)
Still another prior art automatic transmission has been provided which sets a locus of a targeted speed of revolutions of a rotary member during a gear change corresponding to frictional engage elements, an elapsed deterioration of oil and others and fluctuations in production to control an operating pressure of a hydraulic servo so that the speed of revolutions of the rotary member changes along the locus. (Hereinafter referred to as "the third prior art automatic transmission". See Japanese Patent Laid-Open No. 63-212137.)
In controllers of the prior art automatic transmissions described above, however, the gear change is slowed down if the gear change is made while traveling in high-speed and a large gear change shock is caused if the gear change is made while traveling in low-speed in the case of the first prior art automatic transmission.

That is, while it is adapted so that the line pressure is governed corresponding to the input torque to make the gear change by engaging the frictional engage elements, the frictional engage elements receive an inertia torque for changing a speed of revolution of the rotary members in a state (hereinafter referred to as the "inertia phase") when the speed of revolution of the rotary members on the input side such as the engine and torque converter is changing. Therefore, the hydraulic servo is required to generate a higher operating pressure for the inertia torque which the frictional engage elements receive.

The inertia torque can be generally represented by a value obtained by multiplying an inertia moment of the rotary members with an angular acceleration (change of speed of revolution) of the rotary members. Accordingly, even if the gear change is made with the same input torque, a larger inertia torque is generated when a speed of revolution of the input side rotary members is high and a smaller inertia torque is generated when the speed of revolution of the input side rotary members is low.

As a result, the frictional engage elements cannot receive a sufficiently large inertia torque while traveling in high-speed, making the gear change slow and receive a full of small inertia torque while traveling in low-speed, causing a large gear change shock.

Contrary to that, because the second and third prior art automatic transmissions are adapted so that an operating pressure of the hydraulic servo is controlled corresponding to a gear change time and a speed of revolution of the rotary members in the inertia phase, a control gain has to be increased in order to control the operating pressure corresponding to such a large change of torque caused when the frictional engage elements receive the inertia torque. However, the increase of the control gain disallows the operating pressure to be finely adjusted and thereby to fully accommodate to the elapsed deterioration of the frictional engage elements and oil and to the fluctuations in manufacturing.

Accordingly, it is an object of the present invention to solve the aforementioned problems of the prior art controllers of the automatic transmissions by providing a controller of an automatic transmission which allows to make a gear change favorably in any traveling condition and to always obtain the best gear change characteristics.

In order to achieve the aforementioned objects, a controller of an automatic transmission of the present invention comprises hydraulic servos for engaging and disengaging frictional engage elements, oil supplying means for supplying oil to the hydraulic servos corresponding to a gear change step, input torque determining means for determining an input torque input to the transmission, inertia torque estimating means for estimating an inertia torque corresponding to a varying speed of number of revolutions of a rotary member during the gear change, input torque correcting means for calculating a required operating torque by adding the input torque with the inertia torque and operating pressure control means for controlling an operating pressure by corresponding to the required operating torque.

The input torque determining means determines an input torque input to the transmission and the inertia torque estimating means estimates an inertia torque based on a varying speed of number of revolutions of a rotary member during gear change. The input torque correcting means calculates a required operating torque by receiving the input torque from the input torque determining means and the inertia torque from the inertia torque estimating means and operating pressure control means controls an operating pressure by corresponding to the required operating torque calculated by the input torque correcting means.

Accordingly, because the operating pressure corresponding to the required operating torque is generated in the hydraulic servo, the operating pressure required for a gear change can be generated in the hydraulic servo no matter how a throttle opening and driving speed may be or even if the gear change is made step by step or jumped gear change is made, thus allowing to make a gear change favorably in any traveling condition and to always obtain the best gear change characteristics.
Fig. 1 is a functional block diagram of a controller of an automatic transmission showing an embodiment of the present invention;
Fig. 2 is a schematic diagram of the automatic transmission according to the embodiment of the present invention;
Fig. 3 is a table showing operations of the automatic transmission according to the embodiment of the present invention;
Fig. 4 is a schematic diagram of the controller of the automatic transmission showing the embodiment of the present invention;
Fig. 5 is a block diagram of the controller of the automatic transmission showing the embodiment of the present invention;
Fig. 6 is a graph showing a targeted gear change time map according to the embodiment of the present invention;
Fig. 7 is a graph showing a targeted revolution varying speed map according to the embodiment of the present invention;
Fig. 8 is a main flowchart showing the operation of the controller of the automatic transmission according to the embodiment of the present invention;
Fig. 9 is a flowchart of a subroutine of power on/off discriminating process in the embodiment of the present invention;
Fig. 10 is a flowchart of a subroutine of shift determining process in the embodiment of the present invention;
Fig. 11 is a flowchart of a subroutine of commanded gear ratio reading process in the embodiment of the present invention;
Fig. 12 is a drawing illustrating a manual switch in the embodiment of the present invention;
Fig. 13 is a table for discriminating shift positions according to the embodiment of the present invention;
Fig. 14 is a speed change map according to the embodiment of the present invention;
Fig. 15 is a flowchart of a subroutine of inertia torque estimating process and input torque correcting process according to the embodiment of the present invention;
Fig. 16 is a flowchart of another subroutine of inertia torque estimating process and input torque correcting process according to the embodiment of the present invention;
Fig. 17 is a flowchart of a subroutine of basic hydraulic pressure determining process according to the embodiment of the present invention;
Fig. 18 is a graph showing a first hydraulic pressure control map according to the embodiment of the present invention;
Fig. 19 is a graph showing a second hydraulic pressure control map according to the embodiment of the present invention;
Fig. 20 is a graph showing a third hydraulic pressure control map according to the embodiment of the present invention;
Fig. 21 is a graph showing a fourth hydraulic pressure control map according to the embodiment of the present invention;
Fig. 22 is a graph showing an example of optimum brake torque during up-shift gear change according to the embodiment of the present invention;
Fig. 23 is a graph showing an example of optimum brake torque during down-shift gear change according to the embodiment of the present invention; and
Fig. 24 is a diagram illustrating a hydraulic circuit according to the embodiment of the present invention.

Referring now to the drawings, preferred embodiments of the present invention will be explained in detail.

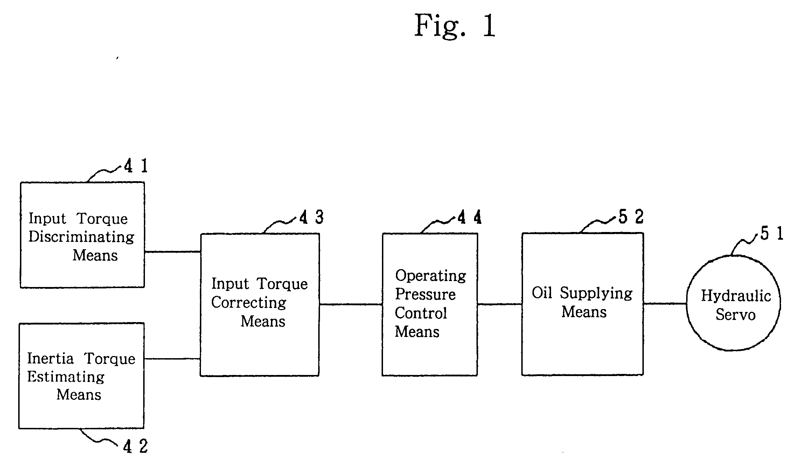

Fig. 1 is a functional block diagram of a controller of an automatic transmission showing an embodiment of the present invention.

In the figure, the reference numeral (41) denotes input torque determining means for determining an input torque input to the transmission, (42) inertia torque estimating means for estimating an inertia torque corresponding to a varying speed of number of revolutions of a rotary member during gear change, (43) input torque correcting means for calculating a required operating torque by adding the input torque with the inertia torque, (44) operating pressure control means for controlling an operating pressure by corresponding to the required operating torque, (51) a hydraulic servo for engaging and disengaging frictional engage elements (not shown) and (52) oil supplying means for supplying oil to the hydraulic servo corresponding to a gear change step.

By the way, while the hydraulic servo 51 corresponds to hydraulic servos B-0 through B-3 and C-0 through C-2 described later, another servo may be included depending on a structure of the transmission.

The input torque determining means 41 determines an input torque input to the transmission and the inertia torque estimating means 42 estimates an inertia torque corresponding to a varying speed of number of revolutions of a rotary member during a gear change. The input torque correcting means 43 then calculates a required operating torque by receiving the input torque from the input torque determining means 41 and the inertia torque from the inertia torque estimating means 42 and the operating pressure control means 44 controls an operating pressure corresponding to the required operating torque calculated by the input torque correcting means 43.

Accordingly, because the operating pressure corresponding to the required operating torque is generated in the hydraulic servo 51, the operating pressure required for a gear change can be generated in the hydraulic servo 51 no matter how a throttle opening and driving speed may be or even if the gear change is made step by step or jumped gear change is made, thus allowing to make the gear change favorably in any traveling condition and to always obtain the best gear change characteristics.

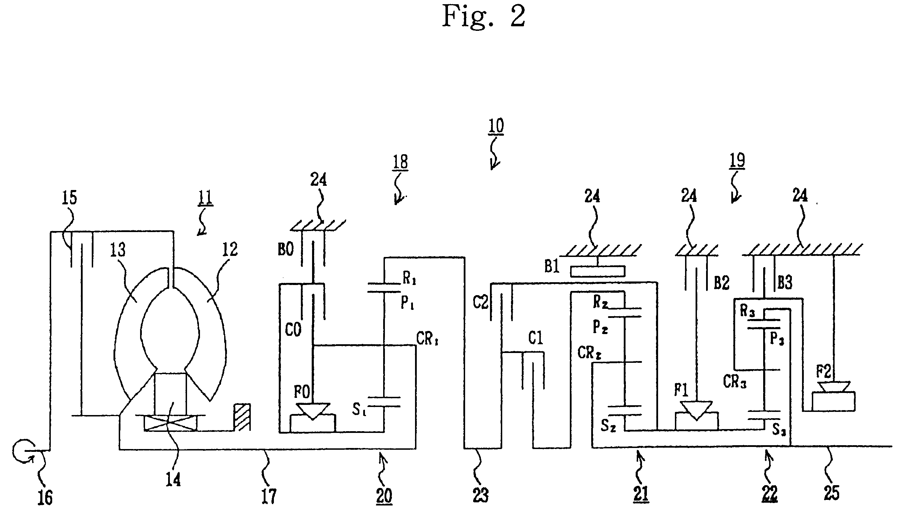

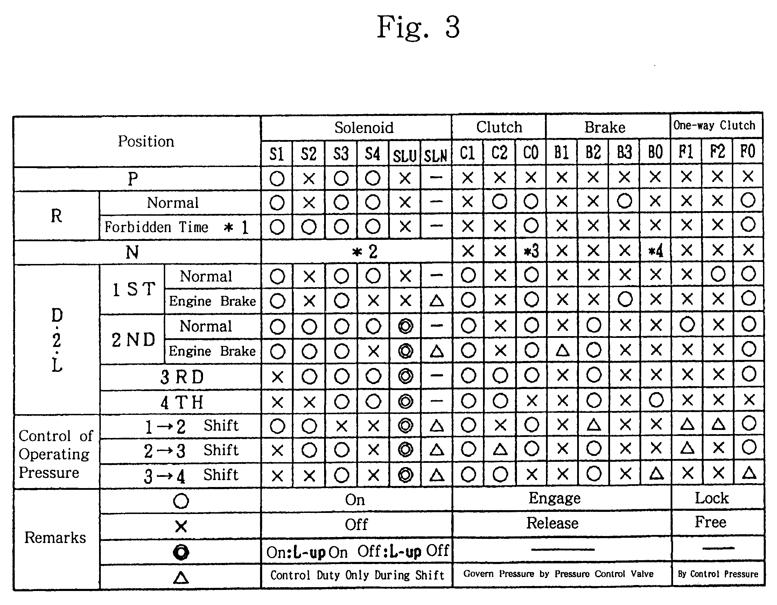

Fig. 2 is a schematic diagram of the automatic transmission according to the embodiment of the present invention and Fig. 3 is a table showing operations of the automatic transmission according to the embodiment of the present invention.

In Fig. 2, the automatic transmission comprises a transmission (T/M) 10 and a torque converter 11, wherein revolutions generated by an engine (not shown) are transmitted to the transmission 10 which changes their speed and then to driving wheels (not shown).

The torque converter 11 comprises a pump impeller 12, turbine runner 13 and stator 14 as well as a lock-up clutch 15 for improving a power transmission efficiency and transmits revolutions of an input member 16 which is an output shaft of the engine to an input shaft 17 of the transmission 10 indirectly by a flow of oil within the 11 or directly by locking the lock-up clutch 15.

The transmission 10 comprises a sub-gear change unit 18 and main gear change unit 19. The sub-gear change unit 18 has an overdrive planetary gear unit 20 and the main gear change unit 19 has a front planetary gear unit 21 and rear planetary gear unit 22.

The overdrive planetary gear unit 20 comprises a carrier CR₁ supporting a pinion P₁ connected to the input shaft 17, sun gear S₁ surrounding the input shaft 17 and ring gear R₁ linked to an input shaft 23 of the main gear change unit 19. The carrier CR₁ and the sun gear S₁ are linked via a third clutch C0 and a third one-way clutch F0 and the sun gear S₁ and a case 24 area linked via a fourth brake B0.

On the other hand, the front planetary gear unit 21 comprises a carrier CR₂ supporting a pinion P₂ connected to an output shaft 25, sun gear S₂ surrounding the output shaft 25 and is integrally formed with a sun gear S₃ of the rear planetary gear unit 22 and ring gear R₂ linked to the input shaft 23 via a first clutch C1. The input shaft 23 and the sun gear S₂ are linked via a second clutch C2 and the sun gear S₂ and the case 24 are linked via a first brake B1 composed of a band brake. The sun gear S₂ and the case 24 are further linked via a first one-way clutch F1 and second brake B2.

Then the rear planetary gear unit 22 comprises a carrier CR₃ supporting a pinion P₃, sun gear S₃ and ring gear R₃ integral with the input shaft 25. The carrier CR₃ and the case 24 are linked via a third brake B3 and second one-way clutch F2 provided in parallel.

Solenoid valves S1 through S4, linear solenoid valves SLU and SLN, first clutch C1, second clutch C2, third clutch C0, first brake B1, second brake B2, third brake B3, fourth brake B0, first one-way clutch F1, second one-way clutch F2 and third one-way clutch F0 in the aforementioned automatic transmission are controlled in each gear change step of P-range, R-range, D-range, 2-range and L-range, respectively, as shown in Fig. 3. By the way, for item *1 in Fig. 3, a discriminating speed for prohibiting from driving in the R-range is set at 20 [km/h]. Further for item *2, each of the solenoid valves S1 through S4 in the N-range is controlled corresponding to a driving speed and becomes a solenoid pattern in the D-range. Further, for item *3, the third clutch C0 is engaged in the first to third speed and for item *4, the fourth brake B0 is engaged in the fourth speed.

During the first speed in the D-range, 2-range or L-range, the first clutch C1 and third clutch C0 are engaged and the second one-way clutch F2 and third one-way clutch F0 are put into a locked state. Therefore, in the overdrive planetary gear unit 20, the transmission is put into a state directly coupled via the third clutch C0 and third one-way clutch F0 and the revolution of the input shaft 17 is transmitted to the main gear change unit 19 as it is. Further, in the main gear change unit 19, the revolution of the input shaft 23 is transmitted to the ring gear R₂ of the front planetary gear unit 21 via the first clutch C1, to the carrier CR₂ and to the output shaft 25 which is integral with the carrier CR₂. It then tries to give a torque to the carrier CR₃ of the rear planetary gear unit 22 via the sun gears S₂ and S₃, but the revolution of the carrier CR₃ is blocked by the lock of the second one-way clutch F2. Accordingly, the pinion P₃ autorotates and transmits the decelerated revolution to the ring gear R₃ which is integral with the output shaft 25.

During the second speed in the D-range, 2-range or L-range, the first clutch C1, third clutch C0 and second brake B2 are engaged and the first one-way clutch F1 and third one-way clutch F0 are put into a locked state. Therefore, in the overdrive planetary gear unit 20, the direct coupling state is maintained and the revolution of the input shaft 17 is transmitted to the input shaft 23 of the main gear change unit 19 as it is. In the main gear change unit 19, the revolution of the input shaft 23 is transmitted to the ring gear R₂ of the front planetary gear unit 21 via the first clutch C1. It then tries to give a torque to the sun gear S₂ via the pinion P₂, but it is blocked because the first one-way clutch F1 is put into the locked state along the engagement of the second brake B2. Accordingly, the carrier CR₂ rotates while autorotating the pinion P₂ and the revolution of the second speed is transmitted to the output shaft 25 only via the front planetary gear unit 21.

During the third speed in the D-range, 2-range or L-range, the first clutch C1, second clutch C2, third clutch C0 and second brake B2 are engaged and the third one-way clutch F1 is put into a locked state. Therefore, in the overdrive planetary gear unit 20, the direct coupling state is maintained and the revolution of the input shaft 17 is transmitted to the input shaft 23 of the main gear change unit 19 as it is. In the main gear change unit 19, the front planetary gear unit 21 is put into a direct coupling state as the first clutch C1 and second clutch C2 are engaged and the revolution of the input shaft 23 is transmitted to the output shaft 25 as it is.

During the fourth speed, i.e. the fastest speed step, in the D-range, 2-range or L-range, the first clutch C1, second clutch C2, second brake B2 and fourth brake B0 are engaged. In the main gear change unit 19, the third clutch C0 is released and the fourth brake B0 is engaged. Accordingly, the sun gear S₁ of the overdrive planetary gear unit 20 is locked by the engagement of the fourth brake B0, the carrier CR₁ rotates and transmits the revolution while autorotating the pinion P₁ and the revolution of the overdrive is transmitted to the input shaft 23 of the main gear change unit 19 which is in the direct coupling state.

Next, the controller of the automatic transmission will be explained.

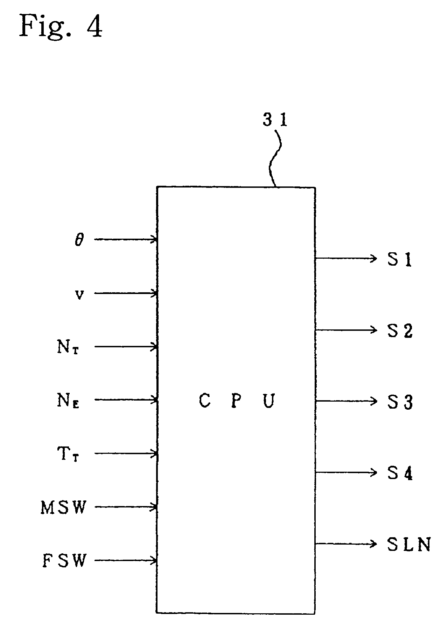

Fig. 4 is a schematic diagram of the controller of the automatic transmission showing the embodiment of the present invention.

In the figure, the reference numeral and character (31) denotes a CPU for controlling the whole controller of the automatic transmission to which a throttle opening theta, driving speed v, number of revolutions of the input shaft 17 (Fig. 2) (hereinafter referred to as "the input number of revolutions) N_{T}, engine speed N_{E}, input torque T_{T} and others are input in a form of detection signal of each, (MSW) a manual switch signal and (FSW) a gear change feel select signal.

On the other hand, the CPU 31 controls the solenoid valves S1 through S4 and linear solenoid valve SLN, etc. The solenoid valve S1 switches a 2-3 shift valve (not shown), solenoid valve S2 switches a 1-2 shift valve and 3-4 shift valve (not shown), solenoid valve S3 switches a B-1 timing valve (not shown) and solenoid valve S4 switches an engine brake control valve (not shown). The linear solenoid valve SLN operates a pressure control valve (not shown).

The CPU 31 discriminates a traveling pattern of the vehicle based on each of the detection signals, controls the linear solenoid valve SLN per each traveling pattern and controls an operating pressure generated by the hydraulic servo 51 (Fig. 1) or back pressure of an accumulator (not shown) in engaging the frictional engage elements such as the first clutch C1, second clutch C2, third clutch C0, first brake B1, second brake B2, third brake b3 and fourth brake B0.

Next, the CPU 31 will be explained.

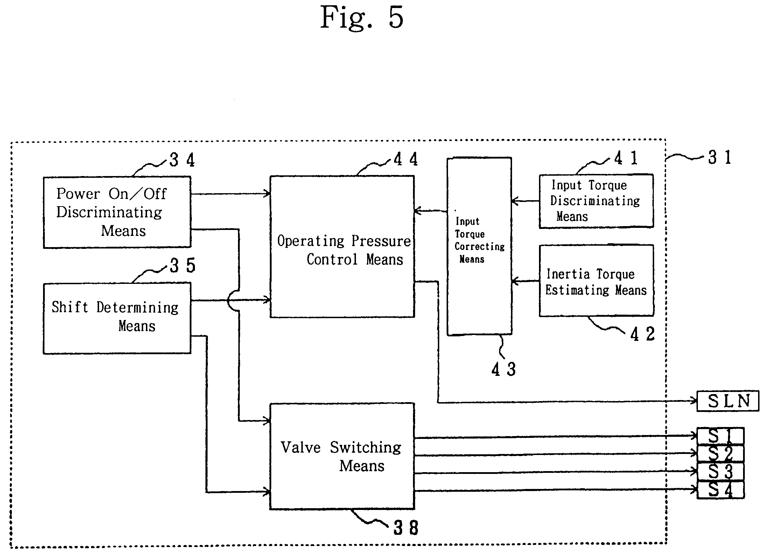

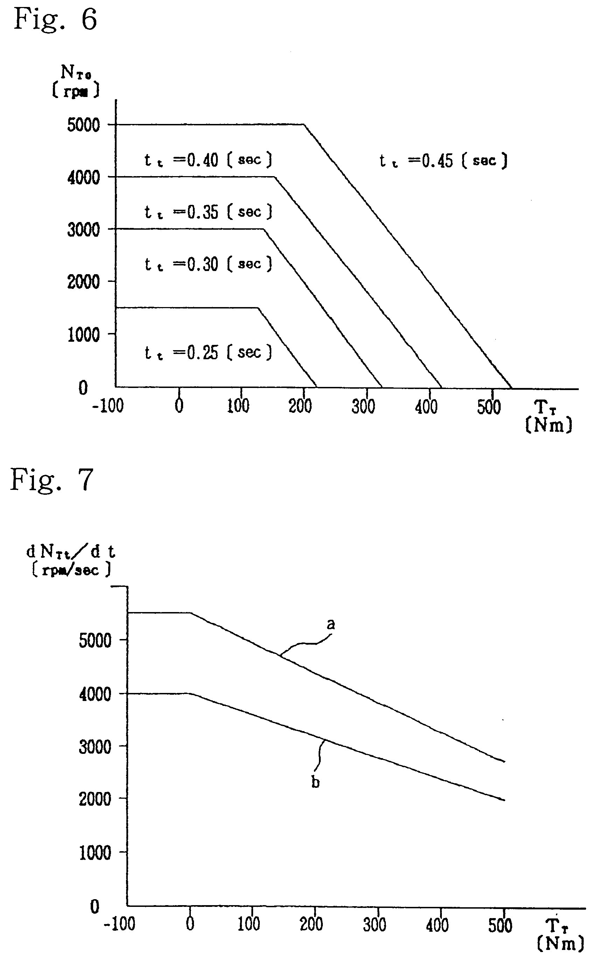

Fig. 5 is a block diagram of the controller of the automatic transmission showing the embodiment of the present invention, Fig. 6 is a graph showing a targeted gear change time map according to the embodiment of the present invention and Fig. 7 is a graph showing a targeted revolution varying speed map according to the embodiment of the present invention.

In the figure, the reference numeral and character (31) denotes the CPU, (34) power on/off discriminating means for discriminating whether the vehicle is in a power-on state. The power on/off discriminating means 34 discriminates whether an accel pedal (not shown) is being stepped on or not and determines that the vehicle is in the power-on state when the pedal is being stepped on and that the vehicle is power-off state when the pedal is not being stepped on.

The reference numeral (35) denotes shift determining means for determining whether an up-shift gear change or down-shift gear change is to be made, (38) valve switching means for controlling the solenoid valves S1 through S4 based on the discrimination result obtained by the power on/off discriminating means 34 and on the determination result made by the shift determining means 35 and (41) input torque determining means for determining the input torque of the automatic transmission.

The input torque determining means 41 comprises a torque sensor (not shown) mounted on the input shaft 17 (Fig. 2) and is capable of directly detecting the input torque T_{T}, of estimating the input torque T_{T} by information from a CPU for controlling the engine (not shown) and of estimating the input torque T_{T} from the input and output number of revolutions of the torque converter 11.

The reference numeral (42) denotes inertia estimating means for estimating an inertia torque during a gear change. The number of revolutions of rotary members on the input side of the frictional engage elements (not shown) which are engaged during gear change causes the inertia torque as it is changed when the frictional engage elements are engaged. Then in the present embodiment, a targeted input number of revolutions N_{Tt} is calculated from the input number of revolutions when a gear change is started (hereinafter referred to as "the input number of revolutions at the gear change starting time") N_{TO} and a gear step before and after the gear change iₜ/iₒ, a difference of the targeted input number of revolutions N_{Tt} and the input number of revolutions at the gear change starting time is divided by a targeted gear change time tₜ to calculate an input revolution varying speed dN_{T}/dt during the the gear change, and the input revolution varying speed dN_{T}/dt is multiplied with a constant equivalent to an inertia moment I of the rotary members on the input side to obtain an inertia torque T_{I}.

Although the input number of revolutions N_{T} has been detected as the number of revolutions of the rotary member on the input side to estimate the inertia torque T_{I} utilizing the change of the input number of revolutions N_{T} in the present embodiment, the inertia torque T_{I} may be estimated utilizing not the change of the input number of revolutions N_{T}, but the engine speed N_{E} and the number of revolutions of a clutch drum or brake drum (not shown) of each frictional engage element of the transmission 10.

The targeted gear change time tₜ is set based on a thermal capacity of the frictional engage element or gear change feeling and is set for example based on the input number of revolutions N_{T} or the number of revolutions of the rotary member on the output side of the frictional engage element. The rotary members on the output side may be for example the output shaft of the automatic transmission, propeller shaft (not shown) or wheels (not shown).

The targeted gear change time tₜ is created per each gear change step and may be set by reading from a targeted gear change time map having parameters of the input torque T_{T} and the input number of revolutions N_{TO}, a targeted gear change time map having a parameter of only the input number of revolutions NTO or a targeted gear change time map having parameters of the input number of revolutions N_{TO} and gear step iₜ/iₒ as shown in Fig. 6. Then the inertia torque estimating means 42 needs not calculate the input revolution varying speed dN_{T}/dt one after another and can read the inertia torque T_{I} from the targeted revolution varying speed map by preparing beforehand the targeted revolution varying speed map as shown in Fig. 7 by the calculated targeted revolution varying speed dN_{Tt}/dt. In Fig. 7, the symbol (a) denotes the targeted revolution varying speed dN_{Tt}/dt when the gear change feel indicated by the feel select signal FSW is hard and (b) the targeted revolution varying speed dN_{Tt}/dt when the gear change feel indicated by the gear change feel select signal FSW is soft. By the way, the targeted revolution varying speed dN_{Tt}/dt when a down-shift gear change is made in the power-off state may be set at a constant value. The driving speed v may be also utilized as a parameter.

In any case, the shortest possible targeted gear change time tₜ is set on condition that an exothermic amount of the frictional engage elements generated during gear change stays within a permissible range. By the way, the driver may select either a driving in which a small gear change shock is generated or a driving in which no gear change shock is generated by providing a switch (not shown) for switching the targeted gear change time tₜ.

The reference numeral (43) denotes input torque correcting means for correcting the input torque T_{T} based on the determination result of the input torque determining means 41 and the estimation result of the inertia torque estimating means 42 to calculate a required operating torque T_{TM} and (44) operating pressure control means for controlling an operating pressure by the linear solenoid valve SLN based on the discrimination result of the power on/off discriminating means 34 and the determination result of the shift determining means 35.

That is, the inertia torque T_{I} estimated by the inertia torque estimating means 42 is added to the input torque T_{T} determined by the input torque determining means 41 to calculate the required operating torque T_{TM} of each frictional engage element. Then the line pressure is governed corresponding to the required operating torque T_{TM} to be a controlled pressure and oil under the controlled pressure is supplied to each hydraulic servo 51 (Fig. 1) to generate the operating pressure.

To that end, various hydraulic pressure control maps using the required operating torque T_{TM} as a parameter are prepared and the current value of the linear solenoid valve SLN is set by reading the hydraulic pressure control maps.

Because the operating pressure required for gear change can be thus generated in the hydraulic servo 51 no matter how a throttle opening theta and driving speed v may be or even if the gear change is made step by step or jumped gear change is made, the gear change can be favorably made in any traveling condition and the best gear change characteristics can be always obtained.

By the way, the inertia torque T_{I} may be calculated by setting a locus of the input number of revolutions N_{Tt} and by following the locus. In this case, because the controlled pressure is controlled so that it corresponds to the inertia torque T_{I}, the operating pressure becomes closer to a value actually needed and more stable gear change characteristics can be obtained.

Although the engaging pressure control means 44 governs the line pressure by the linear solenoid valve SLN as the controlled pressure and oil under the controlled pressure is supplied to the hydraulic servo 51 of each frictional engage element to generate the operating pressure in the present embodiment, it may be supplied not to the hydraulic servo 51 but to a back pressure chamber of the accumulator (not shown) communicated with each hydraulic servo 51 to control the back pressure of the accumulator.

While the required operating torque T_{TM} is what the input torque T_{T} is added with the inertia torque T_{I} only when a gear change is made, it is equal to the input torque T_{T} during normal traveling. Accordingly, the line pressure may be governed corresponding to the traveling condition and a driving load of a oil pump (not shown) may be reduced to reduce power loss of the engine.

Next, the operation of the controller of the automatic transmission constructed as described above will be explained.

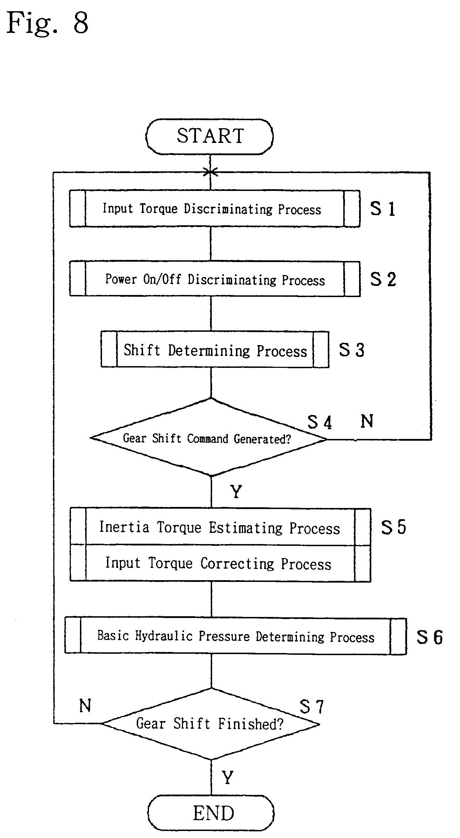

Fig. 8 is a main flowchart showing the operation of the controller of the automatic transmission according to the embodiment of the present invention.
Step S1: Determine the input torque T_{T} by the input torque determining means 41 (Fig. 5).
Step S2: Discriminate whether the vehicle is in the power on or off state by the power on/off discriminating means 34.
Step S3: The shift determining means 35 determines whether an up-shift gear change is to be made or down-shift gear change is to be made.
Step S4: Discriminate whether a gear change command is being issued or not. When the gear change command is being issued, advances to Step S5 and when no gear change command is being issued, return to Step S1.
Step S5: The inertia torque estimating means 42 estimates the inertia torque T_{I} and the input torque correcting means 43 corrects the input torque T_{T} to calculate the required operating torque T_{TM}.
Step S6: The engaging pressure control means 44 determines a basic hydraulic pressure by the linear solenoid valve SLN based on the hydraulic pressure control map as a controlled pressure. On the other hand, the solenoid valves S1 through S4 are controlled by the valve switching means 38.
Step S7: Discriminate whether the gear change has been finished or not. If the gear change has been finished, end the process and when the gear change has not been finished, return to Step S1.

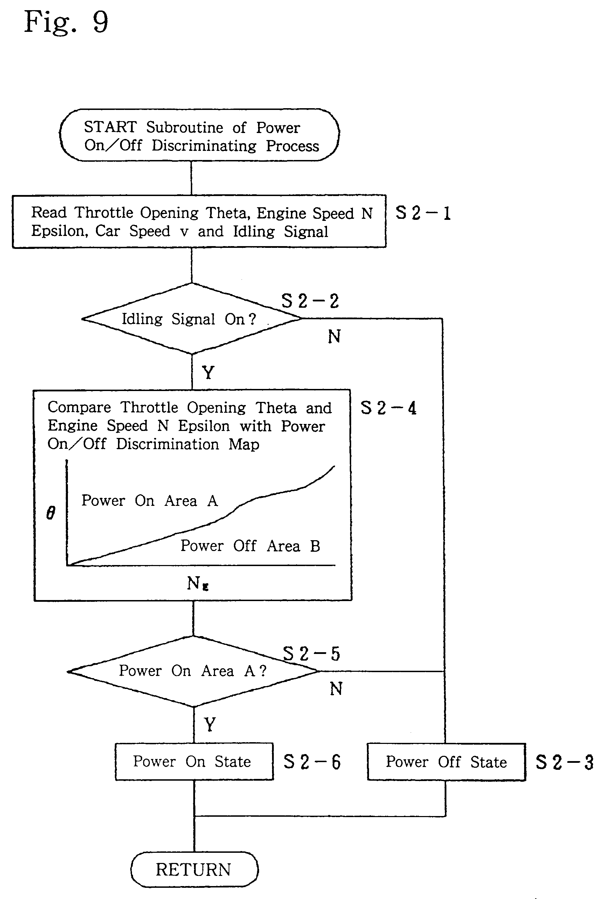

Next, a subroutine of the power on/off discriminating process made by the power on/off discriminating means 34 in Step S2 in Fig. 8 will be explained. Fig. 9 is a flowchart of the subroutine of power on/off discriminating process in the embodiment of the present invention.
Step S2-1: Read a throttle opening theta, engine speed N_{E}, driving speed v and idling signal.
Step S2-2: Discriminate whether the idling signal is on or not. When it is on, it is apparent that the accel pedal (not shown) is not being stepped on, so that advance to Step S2-3 and when it is off, advance to Step S2-4.
Step S2-3: Discriminate that the vehicle is in the power off state.
Step S2-4: Compare the throttle opening theta and engine speed N_{E} with the power on/off discrimination map. In this case, the power on/off discrimination map has a power-on area A and power-off area B as shown in the figure and a spot point of the throttle opening theta and engine speed N_{E} belong to either area.
Step S2-5: Discriminate whether the spot point of the throttle opening theta and engine speed N_{E} belong to the power-on area A or not. When they belong to the power-on area, advance to Step S2-6 and when they belong to the power-off area B, advance to Step S2-3.
Step S2-6: Discriminate that it is power on state.

By the way, the power-on state and power-off state may be discriminated by the input torque T_{T}.

Next, a subroutine of the shift determining process performed by the shift determining means 35 (Fig. 5) in Step 3 in Fig. 8 will be explained.

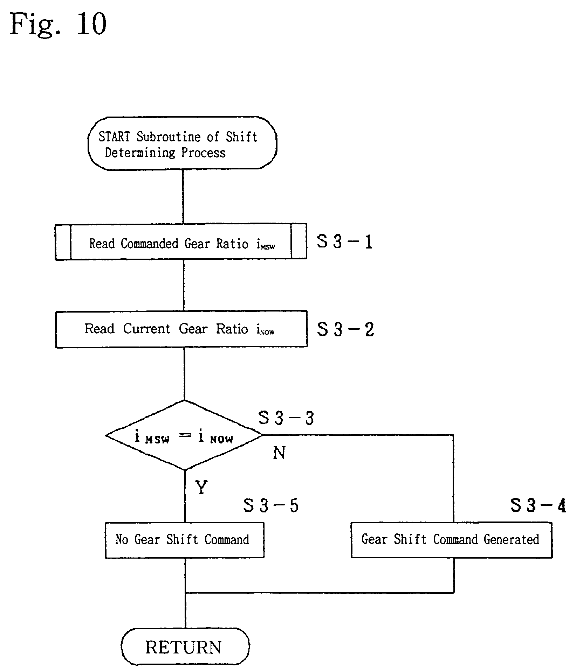

Fig. 10 is a flowchart of the subroutine of shift determining process in the embodiment of the present invention.
Step S3-1: Read a gear ratio of targeted gear change step selected by shift operation (hereinafter referred to as "the commanded gear ratio") i_{MSW}.
Step S3-2: Read a gear ratio of current gear change step (hereinafter referred to as "the current gear ratio". During a gear change, a gear ratio before the gear change) i_{NOW}.
Step S3-3: Determine whether the commanded gear ratio i_{MSW} and the current gear ratio i_{NOW} is equal or not. When the commanded gear ratio i_{MSW} and the current gear ratio i_{NOW} are equal, advance to Step S3-5 and when the commanded gear ratio i_{MSW} and the current gear ratio i_{NOW} are not equal, advance to Step S3-4.
Step S3-4: Issue a gear change command to change gear to the gear change step corresponding to the commanded gear ratio i_{MSW}.
Step S3-5: Issue no gear change command.

By the way, while a gear change inhibiting and limiting logic (not shown) is provided in the subroutine of the actual shift determining process as a protection function for overrun of the engine (not shown) and for an excess of thermal capacity of the frictional engage elements (not shown), its explanation will be omitted here.

Next, a subroutine of the commanded gear ratio reading step in Step S3-1 in Fig. 10 will be explained.

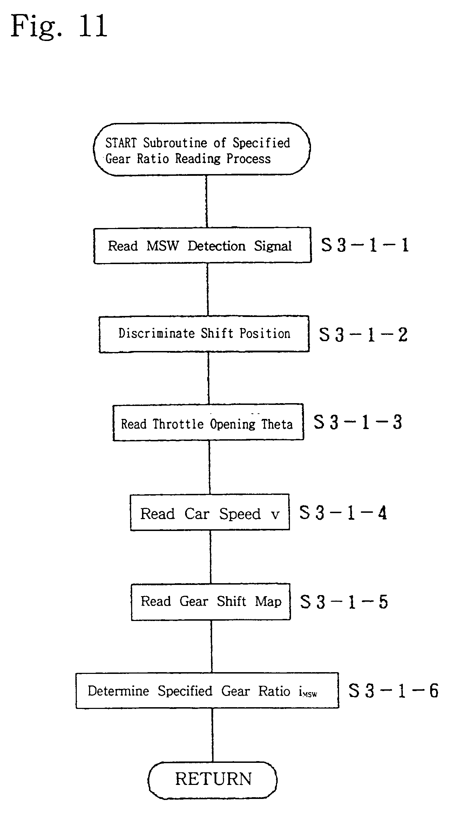

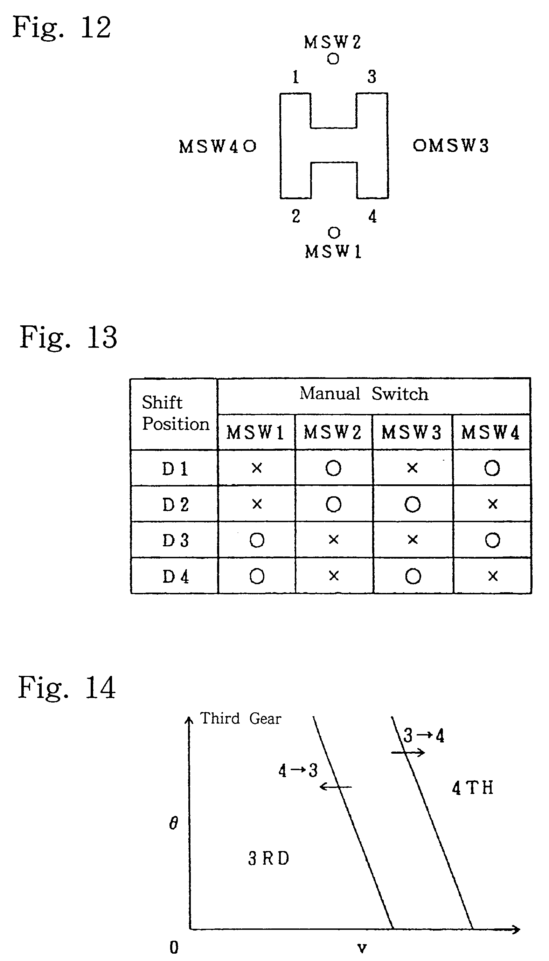

Fig. 11 is a flowchart of the subroutine of commanded gear ratio reading process in the embodiment of the present invention, Fig. 12 is a drawing illustrating a manual switch in the embodiment of the present invention, Fig. 13 is a table for discriminating shift positions in the embodiment of the present invention and Fig. 14 is a gear change map according to the embodiment of the present invention.
Step S3-1-1: Read detection signals of the manual switches MSW1 through MSW4. As shown in Fig. 12, the manual switch MSW1 is turned on when a shift lever (not shown) is moved rearward (lower side in the figure), the manual switch MSW2 is turned on when the shift lever is moved forward (upper side in the figure), the manual switch MSW3 is turned on when the shift lever is moved to the right (right side in the figure) and the manual switch MSW4 is turned on when the shift lever is moved to the left (left side in the figure).
   By the way, although the shift lever is used as shift manipulating means in the present embodiment, push button switches may be used instead of the shift lever. Further, the shift determination can be made by using gear change patterns in an automatic gear change such as a fuzzy gear change point control, for example.
Step S3-1-2: Discriminate a shift position by the discrimination table in Fig. 13 based on the detection signals of the manual switches MSW 1 through 4.
   In Fig. 13, D1 through D4 indicate respective shift positions, marks (O) indicate that the respective manual switches MSW 1 through 4 are on and marks (X) indicate that the respective manual switches MSW 1 through 4 are off.
Step S3-1-3: Read a throttle opening theta.
Step S3-1-4: Read a driving speed v.
Step S3-1-5: Read the gear change map created corresponding to respective shift positions D1 through D4. By the way, Fig. 14 is a gear change map of the shift position D3.
Step S3-1-6: Determine a commanded gear ratio i_{MSW} corresponding to the car speed v and throttle opening theta.

Next, subroutines of the inertia torque estimating process and input torque correcting process in Step S5 in Fig. 8 will be explained.

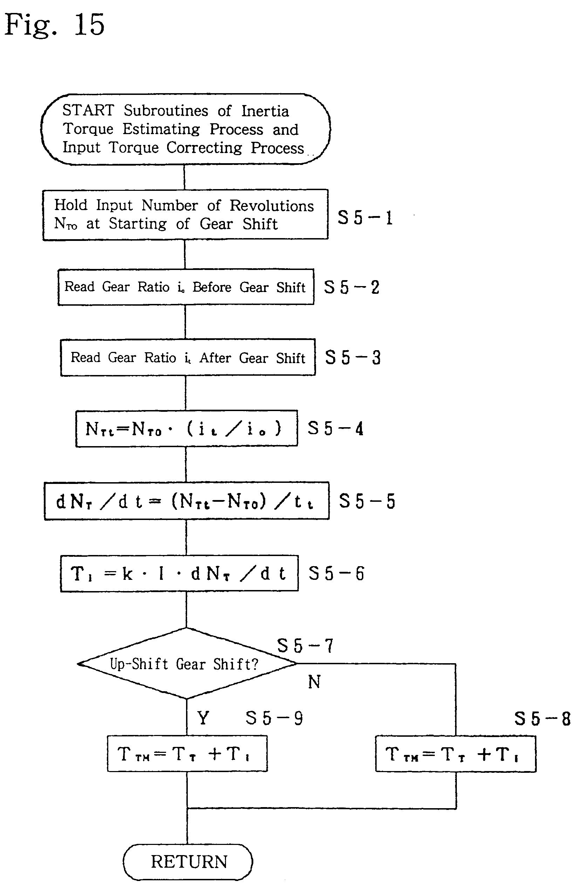

Fig. 15 is a flowchart of the subroutines of inertia torque estimating process and input torque correcting process according to the embodiment of the present invention.
Step S5-1: Hold an input number of revolutions N_{TO} at starting of gear change.
Step S5-2: Read the current gear ratio i_{NOW} (Fig. 10) as a gear ratio iₒ before gear change.
Step S5-3: Read the commanded gear ratio i_{MSW} as a gear ratio iₜ after the gear change.
Step S5-4: Calculate a targeted input number of revolutions after the gear change N_{Tt}; ${\text{N}}_{\text{Tt}} {\text{= N}}_{\text{TO}} {\text{* (i}}_{\text{t}} {\text{/i}}_{\text{o}} \text{)}$
Step S5-5: Calculate an input revolution varying speed during the gear change dN_{T}/dt based on the targeted gear change time tₜ read from the targeted input number of revolutions N_{Tt}, the input number of revolutions at gear change starting time and the targeted gear change time map in Fig. 6; ${\text{dN}}_{\text{T}} {\text{/dt = (N}}_{\text{Tt}} {\text{- N}}_{\text{TO}} {\text{)/t}}_{\text{t}}$
Step S5-6: Calculate an inertia torque T_{I} based on the inertia moment I of the rotary member on the input side of the frictional engage element and the input revolution varying speed dN_{T}/dt; ${\text{T}}_{\text{I}} {\text{= k * I * dN}}_{\text{T}} \text{/dt}$ (k: constant)
Step S5-7: Discriminate whether the gear change command in Step S3-4 in Fig. 10 is that of up-shift or not. If it is that of up-shift, advance to Step S5-8 and if it is that of up-shift, advance to Step S5-9.
Step S5-8: Calculate a required operating torque T_{TM} by correcting the input torque T_{T}; ${\text{T}}_{\text{TM}} {\text{= T}}_{\text{T}} {\text{+ T}}_{\text{I}} {\text{(T}}_{\text{I}} \text{< 0)}$
Step S5-9: Calculate the required operating torque T_{TM} by correcting the input torque T_{T}; ${\text{T}}_{\text{TM}} {\text{= T}}_{\text{T}} {\text{+ T}}_{\text{I}} {\text{(T}}_{\text{I}} \text{> 0)}$

Next, a subroutine of other inertia torque estimating process and input torque correcting process will be explained. In this case, the targeted revolution varying speed dN_{Tt}/dt is read from the targeted revolution varying speed map in Fig. 7.

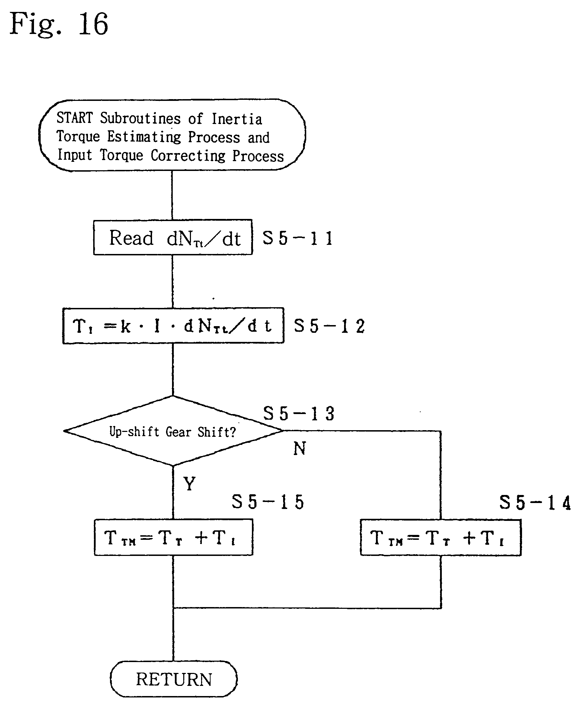

Fig. 16 is a flowchart of the other subroutine of inertia torque estimating process and input torque correcting process according to the embodiment of the present invention.
Step S5-11: Read the targeted revolution varying speed dNᵣₜ/dt from the targeted revolution varying speed map in Fig. 7.
Step S5-12: Calculate the inertia torque T_{I} based on the inertia moment I of the rotary member on the input side of the frictional engage element and the targeted revolution varying speed dNᵣₜ/dt; ${\text{T}}_{\text{I}} {\text{= k * I * dN}}_{\text{Tt}} \text{/dt}$
Step S5-13: Discriminate whether the gear change command in Step S3-4 in Fig. 10 is that of up-shift or not. If it is that of down-shift, advance to Step S5-14 and if it is that of up-shift, advance to Step S5-15.
Step S5-14: Calculate a required operating torque T_{TM} by correcting the input torque T_{T}; ${\text{T}}_{\text{TM}} {\text{= T}}_{\text{T}} {\text{+ T}}_{\text{I}} {\text{(T}}_{\text{I}} \text{< 0)}$
Step S5-15: Calculate the required operating torque T_{TM} by correcting the input torque T_{T}; ${\text{T}}_{\text{TM}} {\text{= T}}_{\text{T}} {\text{+ T}}_{\text{I}} {\text{(T}}_{\text{I}} \text{> 0)}$

Next, a subroutine of the basic hydraulic pressure determining process will be explained.

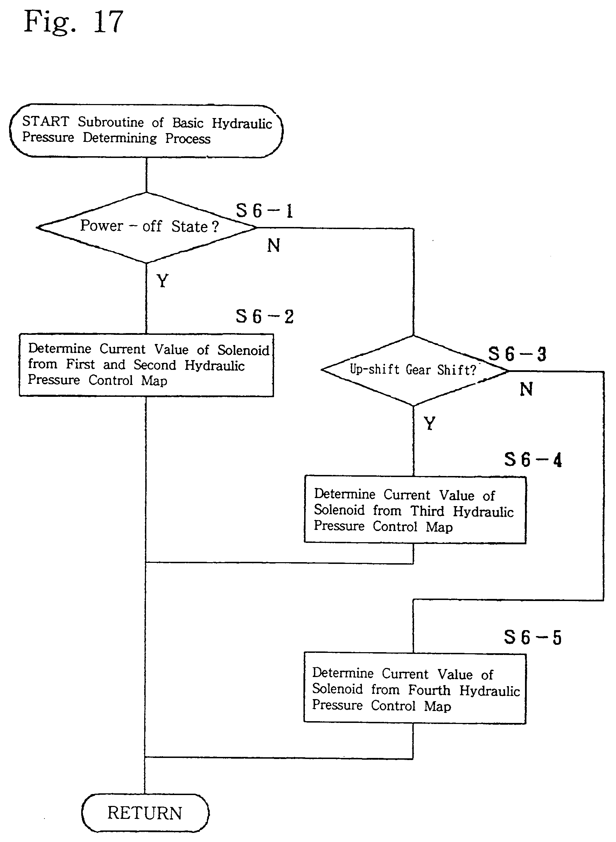

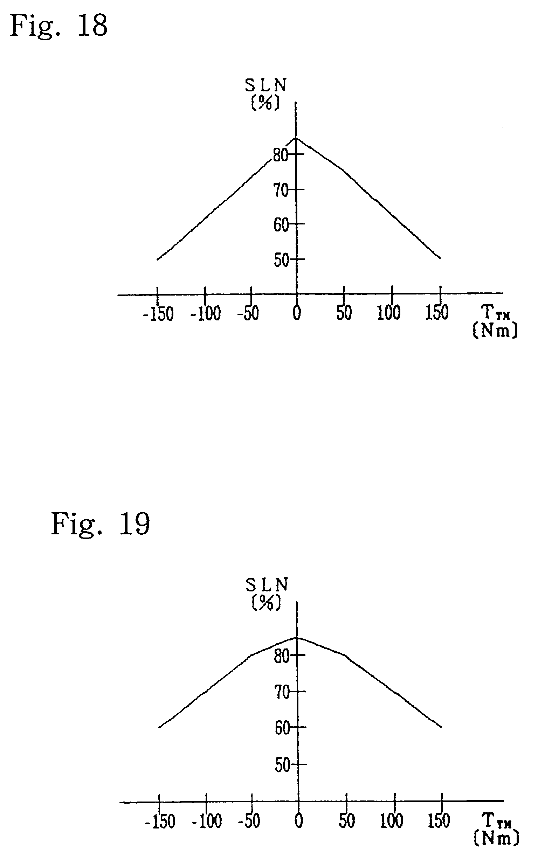

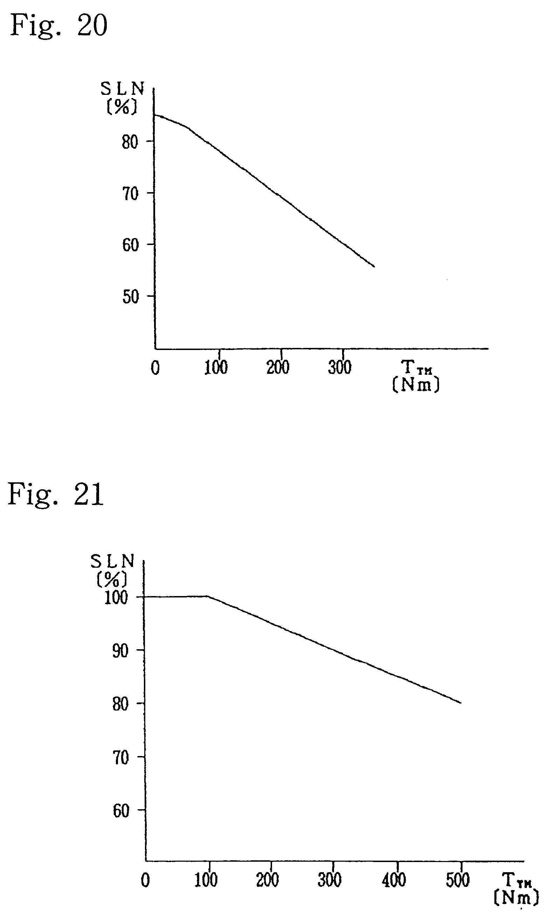

Fig. 17 is a flowchart of the subroutine of basic hydraulic pressure determining process according to the embodiment of the present invention, Fig. 18 is a graph showing a first hydraulic pressure control map according to the embodiment of the present invention, Fig. 19 is a graph showing a second hydraulic pressure control map according to the embodiment of the present invention, Fig. 20 is a graph showing a third hydraulic pressure control map according to the embodiment of the present invention and Fig. 21 is a graph showing a fourth hydraulic pressure control map according to the embodiment of the present invention.
Step S6-1: Discriminate whether it is in a power-off state or not. If it is in the power-off state, advance to Step S6-2 and if it is not in the power-off state, advance to Step S6-3.
Step S6-2: Determine a value of current supplied to a solenoid (not shown) in the linear solenoid valve SLN (Fig. 5) from the first and second hydraulic pressure control maps in Figs. 18 and 19. The first hydraulic pressure control map in Fig. 18 represents a case when an up-shift gear change to the second is made in the power-off state and allows to determine the value of current supplied to the solenoid valve of the linear solenoid valve SLN employing the required operating torque T_{TM} of the hydraulic pressure servo 51 (Fig. 1) of the first brake B1 (Fig. 2) as a parameter. The second hydraulic pressure control map in Fig. 19 represents a case when a down-shift gear change to the first is made in the power-off state and allows to determine the value of current supplied to the solenoid valve of the linear solenoid valve SLN employing the required operating torque T_{TM} of the hydraulic pressure servo 51 of the third brake B3 as a parameter.
Step S6-3: Discriminate whether the gear change command in Step S3-4 in Fig. 10 is that of up-shift or not. If it is that of up-shift, advance to Step S6-4 and if it is that of down-shift, advance to Step S6-5.
Step S6-4: Determine a value of current supplied to the solenoid of the linear solenoid valve SLN from the third hydraulic pressure control map in Fig. 20. The third hydraulic pressure control map in Fig. 20 represents a case when an up-shift gear change to the second is made in the power-on state and allows to determine the value of current supplied to the solenoid valve of the linear solenoid valve SLN employing the required operating torque T_{TM} of the hydraulic pressure servo 51 of the second brake B2 as a parameter.
Step S6-5: Determine a value of current supplied to the solenoid of the linear solenoid valve SLN from the fourth hydraulic pressure control map in Fig. 21. The fourth hydraulic pressure control map in Fig. 21 represents a case when a down-shift gear change to the first is made in the power-on state and allows to determine the value of current supplied to the solenoid valve of the linear solenoid valve SLN employing the required operating torque T_{TM} of the hydraulic pressure servo 51 of the second brake B2 as a parameter.

By the way, while the value of current supplied to the solenoid valve of the linear solenoid valve SLN is determined by employing the first and third hydraulic pressure control maps only during the up-shift gear change, the value of current supplied to the solenoid valve of the linear solenoid valve SLN may be determined by employing the hydraulic pressure control map used for other parameters such as the car speed v during the down-shift gear change.

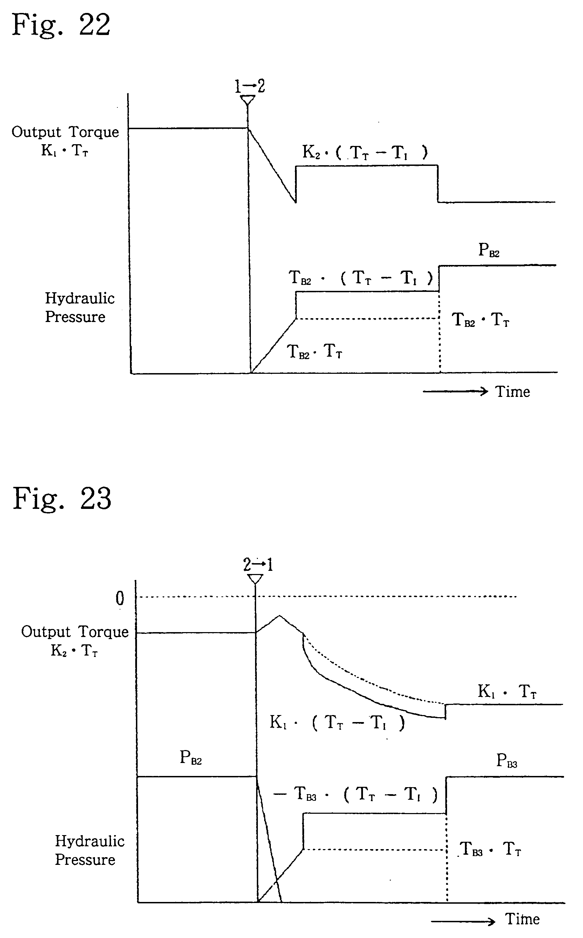

Fig. 22 is a graph showing an example of optimum brake torque during up-shift gear change according to the embodiment of the present invention and Fig. 23 is a graph showing an example of optimum brake torque during down-shift gear change according to the embodiment of the present invention.

In the figure, the reference numeral and character (K₁) denotes a gear ratio in the first speed, (K₂) a gear ratio in the second speed, (T_{T}) an input torque, (T_{I}) an inertia torque, (T_{B2}) an apportionment of torque of the second brake B2 (Fig. 2), (T_{B3}) an apportionment of torque of the third brake B3, (P_{B2}) an operating pressure of the hydraulic servo B-2 and (P_{B3}) an operating pressure of the hydraulic servo B-3.

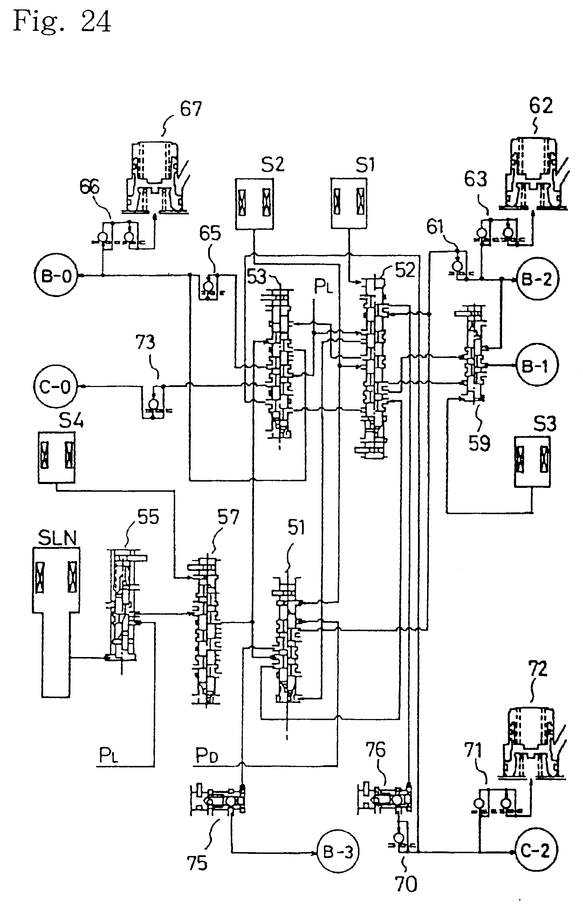

Fig. 24 is a diagram illustrating a hydraulic circuit according to the embodiment of the present invention.

In the figure, the reference numeral and character (P_{L}) denotes a line pressure, (Pₙ) a D range pressure, (51) a 1-2 shift valve for making a 1-2 gear change, (52) a 2-3 shift valve for making a 2-3 gear change, (53) a 3-4 shift valve for making a 3-4 gear change, (55) a pressure control valve, (57) an engine brake control valve and (59) a B-1 timing valve.

Further, the reference numeral (B-1) denotes a hydraulic servo of the first brake B1 (Fig. 2), (B-2) a hydraulic servo of the second brake B2, (B-3) a hydraulic servo of the third brake B3, (B-0) a hydraulic servo of the fourth brake B0, (C-2) a hydraulic servo of the second clutch C2 and (C-0) a hydraulic servo of the third clutch C0.

The hydraulic servo B-2 is supplied with oil via an orifice valve 61 and an operating pressure of the hydraulic servo B-2 is governed by an accumulator 62 connected via an orifice valve 63. The hydraulic servo B-0 is supplied with oil via an orifice valve 65 and an operating pressure of the hydraulic servo B-0 is governed by an accumulator 67 connected via an orifice valve 66. The hydraulic servo C-2 is supplied with oil via an orifice valve 70 and an operating pressure of the hydraulic servo C-2 is governed by an accumulator 72 connected via an orifice valve 71.

By the way, the reference numeral (73) denotes an orifice valve connected to the hydraulic servo C-0, (75) a check valve connected to the hydraulic servo B-3 and (76) a check valve connected to the orifice valve 70.

The reference numeral (S1) denotes a solenoid valve for switching the 2-3 shift valve 52, (S2) a solenoid valve for switching the 1-2 shift valve 51 and the 3-4 shift valve 53, (S3) a solenoid valve for switching the B-1 timing valve 59, (S4) a solenoid valve for switching the engine brake control valve 57 and (SLN) the linear solenoid valve for governing the pressure of the pressure control valve 55.

In the hydraulic circuit constructed as described above, each solenoid of the solenoid valves S1 through S4 becomes ON when the 1-2 gear change is made. At this time, the 1-2 shift valve 51, the 2-3 shift valve 52, the 3-4 shift valve 53 and the engine brake control valve 57 come to the left half position of the drawing (hereinafter referred to as the "left half position") and the B-1 timing valve 59 comes to the left half position of the drawing (hereinafter referred to as the "right half position").

As a result, oil under the D range pressure Pₙ is supplied to the orifice valve 61 via the 1-2 shift valve 51 and its pressure is governed by the orifice valve 61 to be supplied to the hydraulic servo B-2. At this time, the operating pressure of the hydraulic servo B-2 is governed by the accumulator 62 to which oil is supplied via the orifice valve 63. By the way, the hydraulic servo C-0 has been supplied with oil from the time of the first speed.

Thus the hydraulic servo B-2 can be supplied with oil by the limited oil supplying circuit created via the orifice valve 61.

When the 1-2 gear change is made while controlling the operating pressure, each solenoid of the solenoid valves S1 and S2 turns on and each solenoid of the solenoid valves S3 and S4 turns off. At this time, the 1-2 shift valve 51, the 2-3 shift valve 52, the 3-4 shift valve 53 and the B-1 timing valve 59 come to the left half position and the engine brake control valve 57 comes to the right half position. Further, the pressure of the line pressure P_{L} can be governed by the pressure control valve 55 by operating the the linear solenoid valve SLN.

Accordingly oil under the controlled pressure is supplied to the hydraulic servo B-2 via the the engine brake control valve 57, the 1-2 shift valve 51, the 2-3 shift valve 52 and the B-1 timing valve 59.

Next, when the 2-3 gear change is made, the solenoid of the solenoid valve S1 turns off and each solenoid of the solenoid valves S1 through S4 turns on. At this time, the 1-2 shift valve 51, the 3-4 shift valve 53 and the engine brake control valve 57 come to the left half position and the 2-3 shift valve 52 and the B-1 timing valve 59 come to the right half position.

As a result, oil under the D range pressure Pₙ is supplied to the orifice valve 70 via the 1-2 shift valve 51, the 2-3 shift valve 52 and check valve 76 and after its pressure is governed by the orifice valve 70, it is supplied to the hydraulic servo C-2. At this time, the operating pressure of the hydraulic servo C-2 is controlled by the accumulator 72 to which oil is supplied via the orifice valve 71. By the way, the hydraulic servo C-0 and hydraulic servo B-2 have been supplied with oil from the time of the second speed.

Thus the hydraulic servo C-2 can be supplied with oil by the limited oil supplying circuit created via the orifice valve 70.

When the 2-3 gear change is made while controlling the operating pressure, each solenoid of the solenoid valves S1 and S4 turns off and each solenoid of the solenoid valves S2 and S3 turns on. At this time, the 1-2 shift valve 51 and the 3-4 shift valve 53 come to the left half position and the 2-3 shift valve 52, the engine brake control valve 57 and the B-1 timing valve 59 come to the right half position. Further, the pressure of the line pressure P_{L} can be governed by the pressure control valve 55 by operating the the linear solenoid valve SLN.

Accordingly oil under the controlled pressure is supplied to the hydraulic servo C-2 via the the engine brake control valve 57, the 1-2 shift valve 51, the 2-3 shift valve 52 and the 3-4 shift valve 53.

Next, when the 3-4 gear change is made, each solenoid of the solenoid valves S1 and S2 turns off and each solenoid of the solenoid valves S3 and S4 turns on. At this time, the 1-2 shift valve 51 and the engine brake control valve 57 come to the left half position and the 2-3 shift valve 52 and the 3-4 shift valve 53 and the B-1 timing valve 59 come to the right half position.

As a result, oil under the D range pressure Pₙ is supplied to the orifice valve 65 via the 3-4 shift valve 53 and after its pressure is governed by the orifice valve 65, it is supplied to the hydraulic servo B-0. At this time, the operating pressure of the hydraulic servo B-0 is controlled by the accumulator 67 to which oil is supplied via the orifice valve 66. By the way, the hydraulic servo C-2 and hydraulic servo B-2 have been supplied with oil from the time of the third speed.

Thus the hydraulic servo B-2 can be supplied with oil by the limited oil supplying circuit created via the orifice valve 65.

When the 3-4 gear change is made while controlling the operating pressure, each solenoid of the solenoid valves S1, S2 and S4 turns off and the solenoid of the solenoid valve S3 turns on. At this time, the 1-2 shift valve 51 comes to the left half position and the 2-3 shift valve 52, the 3-4 shift valve 53, the engine brake control valve 57 and the B-1 timing valve 59 come to the right half position. Further, the pressure of the line pressure P_{L} can be governed by the pressure control valve 55 by operating the the linear solenoid valve SLN.

Accordingly oil under the controlled pressure is supplied to the hydraulic servo B-0 via the the engine brake control valve 57 and the 3-4 shift valve 53.

Further, when the engine is braked in the first speed, each solenoid of the solenoid valves S1 and S3 turns on and each solenoid of the solenoid valves S2 and S4 turns off. At this time, the 2-3 shift valve 52 and the 3-4 shift valve 53 come to the left half position and the 1-2 shift valve 51, the B-1 timing valve 59 and the engine brake control valve 57 come to the right half position. Further, the pressure of the line pressure P_{L} can be governed by the pressure control valve 55 by operating the the linear solenoid valve SLN. As a result, oil under the controlled pressure Pₙ is supplied to the hydraulic servo B-3 via the engine brake control valve 57, the 1-2 shift valve 51 and check valve 75.

When the engine is braked in the second speed, each solenoid of the solenoid valves S1 through S3 turns on and the solenoid of the solenoid valve S4 turns off. At this time, the 1-2 shift valve 51, the 2-3 shift valve 52 and the 3-4 shift valve 53 come to the left half position and the B-1 timing valve 59 and the engine brake control valve 57 come to the right half position. Further, the pressure of the line pressure P_{L} can be governed by the pressure control valve 55 by operating the the linear solenoid valve SLN. As a result, oil under the controlled pressure Pₙ is supplied to the hydraulic servo B-1 via the engine brake control valve 57, the 1-2 shift valve 51, the 2-3 shift valve 52 and the B-1 timing valve 59.

As described above, oil can be supplied to each hydraulic servo B-2, B-0 and C-0 not only by the limited oil supplying circuit created via the orifice valves 61, 65 and 70 but also by the controlled pressure oil supplying circuit created without going through the orifice valves 61, 65 and 70 when the 1-2, 2-3 and 3-4 gear changes are made. Accordingly, it allows to increase the operating pressure of each of the hydraulic servos B-2, B-0 and C-2 while controlling it, to engage the second brake B2, fourth brake B0 and second clutch C2 and thereby to shorten the gear change time. Further, because the operating pressure can be generated directly by the linear solenoid valve SLN, the operating pressure in the transient state may be accurately controlled.

Further, when the engine is braked in the first and second speed, each hydraulic servo B-3 and B-1 can be supplied with oil by the controlled pressure oil supplying circuit.

On the other hand, because the limited oil supplying circuit is provided, oil under the line pressure P_{L} can be supplied to a predetermined hydraulic servo even when a failure is made, thereby allowing to maintain the control of the gear change.

It should be understood that the present invention is not limited to the preferred embodiments described above and that various modifications may be made based on the spirit of the invention, so that all such modifications shall be included in the scope of the present invention.

## Claims

1. A controller of an automatic transmission having a transmission which is driven by and linked to an engine and is shifted by selectively engaging and disengaging a plurality of frictional engage elements, comprising:
a plurality of hydraulic servos for engaging and disengaging each of said plurality of frictional engage elements;
oil supplying means for supplying oil to a predetermined hydraulic servo for engaging and disengaging one predetermined frictional engage element among said plurality of frictional engage elements engaged when a gear change to a targeted gear change step is made;
input torque determining means for determining an input torque input to said transmission;
inertia torque estimating means for estimating an inertia torque corresponding to a varying speed of number of revolutions of a rotary member during a gear change;
input torque correcting means for calculating a required operating torque by adding said input torque with said inertia torque; and
operating pressure control means for controlling an operating pressure by corresponding to said required operating torque.

2. The controller of the automatic transmission according to Claim 1 characterized in that said inertia torque estimating means estimates the inertia torque by multiplying the varying speed of number of revolutions of said rotary member during the gear change with a constant equivalent to an inertia moment of said rotary member.

3. The controller according to Claim 1 or 2,
further comprising an input revolution sensor for detecting a number of revolutions of said rotary member on the input side of said predetermined frictional engage element and wherein said inertia torque estimating means calculates a targeted input number of revolutions from the input number of revolutions detected by said input revolution sensor and a gear ratio before and after the gear change, calculates the input revolution varying speed during the gear change by dividing a difference of said targeted input number of revolutions and said input number of revolutions at gear change starting time by a targeted gear change time and estimates the inertia torque by multiplying said input revolution varying speed with a constant equivalent to said inertia moment of the rotary member on the input side.

4. The controller of the automatic transmission according to Claim 3, wherein said input revolution sensor detects a number of revolutions of an input shaft of said transmission, speed of said engine or number of revolutions of clutch drum or brake drum of said predetermined frictional engage element.

5. The controller according to Claim 3 or 4,
wherein said inertia torque estimating means has a targeted gear change time map in which said targeted gear change time is set per each gear change step employing at least said input number of revolutions at the gear change starting time as one parameter, calculates the targeted input number of revolutions from the input number of revolutions detected by said input revolution sensor when the gear change is started and the gear ratio before and after the gear change, calculates an input revolution varying speed during the gear change by dividing a difference of said targeted input number of revolutions and said input number of revolutions at the gear change starting time by said targeted gear change time read from said targeted gear change time map and estimates the inertia torque by multiplying said input revolution varying speed with the constant equivalent to the inertia moment of said input side rotary member.

6. The controller of the automatic transmission according to Claim 5, wherein said targeted gear change time map employs said input torque and the input number of revolutions at the gear change starting time, only the input number of revolutions at the gear change starting time or the input number of revolutions at the gear change starting time and the gear ratio before and after the gear change as its parameter.

7. The controller according to any of Claims 1 to 6,
wherein said inertia estimating means has a targeted revolution varying speed map in which targeted revolution varying speed of said rotary member during gear change is set beforehand and estimates the inertia torque by multiplying said targeted revolution varying speed during the gear change with the constant equivalent to the inertia moment of said rotary member.

8. The controller of the automatic transmission according to Claim 7, further comprising a gear change feel select switch capable of arbitrary selecting a gear change feel and wherein said targeted revolution varying speed map is set with a plurality of said targeted revolution varying speeds which correspond to a gear change feel selected by said gear change feel select switch and said inertia torque estimating means selects a predetermined targeted revolution varying speed corresponding to an output signal from said gear change feel select switch.

9. The controller according to any of claims 1 to 8,
wherein said input torque correcting means calculates said required operating torque by adding said input torque with the inertia torque during the gear change and sets said input torque as said required operating torque during when no gear change is made.

10. The controller according to any of claims 1 to 9,
further comprising an accumulator linked with said predetermined hydraulic servo and is capable of adjusting gear change transient characteristics of said predetermined hydraulic servo,
said operating pressure control means controlling said operating pressure by controlling a back pressure of said accumulator corresponding to said required operating torque.
